(19) Europäisches Patentamt
European Patent Office
Office européen des brevets

(11) Veröffentlichungsnummer: **0 242 676 B1**

(12) # EUROPÄISCHE PATENTSCHRIFT

(45) Veröffentlichungstag der Patentschrift: **10.04.91**

(51) Int. Cl.[5]: **C08G 18/32**, C08G 18/65, C08G 18/10, C09D 175/04

(21) Anmeldenummer: **87105006.8**

(22) Anmeldetag: **04.04.87**

(54) **Verfahren zur Herstellung von freie Isocyanatgruppen aufweisenden Oligourethanen, die nach diesem Verfahren erhältlichen Oligourethane und ihre Verwendung als Bindemittel oder Bindemittelkomponente in feuchtigkeitshärtenden Einkomponentenlacken.**

(30) Priorität: **18.04.86 DE 3613064**

(43) Veröffentlichungstag der Anmeldung:
**28.10.87 Patentblatt 87/44**

(45) Bekanntmachung des Hinweises auf die Patenterteilung:
**10.04.91 Patentblatt 91/15**

(84) Benannte Vertragsstaaten:
**AT DE ES FR GB IT NL SE**

(56) Entgegenhaltungen:
**EP-A- 0 160 907**
**FR-A- 2 283 918**

(73) Patentinhaber: **BAYER AG**

**W-5090 Leverkusen 1 Bayerwerk(DE)**

(72) Erfinder: **Pedain, Josef, Dr.**
**Haferkamp 6**
**W-5000 Köln 80(DE)**
Erfinder: **Sonntag, Michael, Dr.**
**Gartenstrasse 27 a**
**W-5068 Odenthal(DE)**

**EP 0 242 676 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von aromatenlöslichen, als Bindemittel für feuchtigkeitshärtende Lacke geeigneten, freie Isocyanatgruppen aufweisenden Oligourethanen durch Umsetzung von organischen Diisocyanaten mit ausgewählten Polyhydroxylverbindungen, die nach diesen Verfahren erhältlichen, freie Isocyanatgruppen aufweisenden Oligourethane und ihre Verwendung als Bindemittel oder als Bindemittelkomponente in feuchtigkeitshärtenden Einkomponentenlacken.

Isocyanat-Prepolymere, die als Bindemittel für feuchtigkeitshärtende Einkomponentenlacke Anwendung finden, sind im Prinzip gut bekannt und beispielsweise in H. Kittel: Lehrbuch der Lacke und Beschichtungen, 1973, Band I, Teil 2, S. 572 ff allgemein beschrieben. Sie werden in der Regel aus niedermolekularen Polyolen und Makropolyolen hergestellt, die mit Diisocyanaten in einem NCO/OH-Verhältnis von 1,4 bis 2,0 umgesetzt werden.

Als Lösemittel werden für die feuchtigkeitshärtenden PUR-Lacke gemäß Stand der Technik im allgmeinen polare Lösungsmittel wie Ester der Essigsäure beispielsweise Ethylacetat oder Ethylglykolacetat eingesetzt, die gegebenenfalls mit wenig polaren Lösungsmitteln die Kohlenwasserstoffen verschnitten sein können. Die ausschließliche Verwendung von Kohlenwasserstoffen als Lösungsmittel ist im allgemeinen nicht möglich, da die Lösungen beim Stehen oder beim Verdünnen von konzentrierten Lösungen auf Verarbeitungskonzentration stark eintrüben und damit für eine Anwendung unbrauchbar werden.

Die aus den genannten Gründen zwingend erforderliche (Mit)Verwendung von polaren Lösungsmitteln, insbesondere auf Esterbasis, in Einkomponenten-Polyurethanlacken gemäß Stand der Technik ist im übrigen noch mit dem Nachteil behaftet, daß polare Lösungsmittel wie z.B. die hauptsächlich zur Anwendung gelangenden Ester der Essigsäure im ausgehärteten Lackfilm lange Zeit in kleinen Mengen festgehalten werden. Bei Lacken, die für Außenanwendungen eingesetzt werden und deshalb den Witterungsbedingungen ausgesetzt sind, hydrolysieren diese Ester. Die dabei entstehende Essigsäure hat zwei sehr nachteilige Wirkungen: Sie katalysiert den Abbau des Lackfilms und sie verschlechtert bei Lacken auf Metall des Korrosionsschutz des Lacks. Beides führt zu einer geringeren Haltbarkeit der Lackierung.

Aufgabe der Erfindung was es deshalb, Einkomponenten-Lackbindemittel zur Verfügung zu stellen, die in wenig polaren aromatischen Kohlenwasserstoffen klar löslich sind und deren Lösungen mit weiteren unpolaren Lösungsmitteln wie aromatischen oder aliphatischen Kohlenwasserstoffen auf die jeweilige Verarbeitungskonzentration weiter verdünnbar sind.

Diese Aufgabe konnte durch die Bereitstellung des nachstehend näher beschriebenen erfindungsgemäßen Verfahrens zur Herstellung von aromatenlöslichen, freie Isocyanatgruppen aufweisenden Oligourethanen gelöst werden. Bei diesem Verfahren werden organische Diisocyanate mit unterschiedlichen Mengen an Makropolyolen des Molekulargewichtsbereichs 500 bis 10,000 und 2,2,4-Trimethylpentandiol-1,3 bzw. dessen nachstehend näher beschriebenen Hydroxylgruppen aufweisenden Derivaten und gegebenenfalls weiteren niedermolekularen Polyolen zur Umsetzung gebracht.

Die Herstellung von linearen, hochmolekularen, aromatenlöslichen Polyurethanen unter Mitverwendung von 2,2,4-Trimethylpentandiol-1,3 als Kettenverlängerungsmittel ist zwar bereits aus DE-OS 34 17 475 bekannt, jedoch konnte nicht ohne weiteres erwartet werden, daß unter Mitverwendung dieses Diols auch verzweigte, vergleichsweise niedermolekulare, freie Isocyanatgruppen aufweisenden Oligourethane in aromatenlöslicher Form zugänglich sein würden, da es sich bei linearen, hochmolekularen Polyurethanen einerseits und vergleichsweise niedermolekularen, verzweigten NCO-Prepolymeren andererseits um Verbindungsklassen einer völlig andersartigen Struktur handelt.

Gemäß einem eigenen, älteren Vorschlag (DE-OS 35 02 265) werden niedermolekulare, urethanmodifizierte Diisocyanate auf Basis von 2,2,4-Trimethylpentandiol-1,3 bzw. dessen Hydroxylgruppen aufweisenden Derivaten beschrieben, jedoch werden bei der Herstellung dieser modifizierten Polyisocyanate keine Makropolyole der Art der nachstehend näher beschriebenen erfindungsgemäßen Ausgangskomponente b) mitverwendet.

Gegenstand der Erfindung ist ein Verfahren zur Herstellung von aromatenlöslichen, als Lackbindemittel geeigneten, freie Isocyanatgruppen aufweisenden Oligourethanen durch Umsetzung von

a) organischen Diisocyanaten

mit

b) Makropolyolen des Molekulargewichtsbereichs 500 bis 10.000

und

c) niedermolekularen Polyolen des Molekulargewichtsbereichs 62 bis 499

unter Einhaltung eines Äquivalentverhältnisses von Isocyanatgruppen zu Hydroxylgruppen von 1,4:1 bis 2:1, dadurch gekennzeichnet, daß man als Komponente c), gegebenenfalls neben anderen niedermolekularen Polyolen, Diole der allgemeinen Formel

$$R^1\left[-O(R^2-O-)_n-H\right]_2$$

in welcher

$R^1$ für einen Rest der Formel

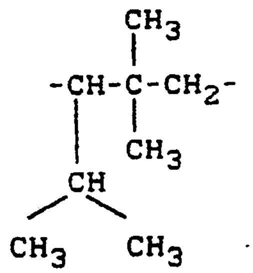

$R^2$ für Reste der Formeln

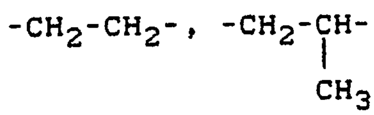

oder

$$-CO-(CH_2)_5-,$$

und n für 0, 1 oder 2 stehen,

in einer Menge von 1 bis 45 Gew.%, bezogen auf das Gewicht aller Ausgangskomponenten a) bis c) verwendet und im übrigen Art und Mengenverhältnisse der Polyhydroxylverbindungen b) und c) so wählt, daß die mittlere Hydroxylfunktionalität dieser Verbindungen bei 2,05 bis 3,5 liegt.

Gegenstand der Erfindung sind auch die nach diesem Verfahren erhältlichen freie Isocyanatgruppen aufweisenden Oligourethane.

Gegenstand der Erfindung ist schließlich auch die Verwendung der nach dem erfindungsgemäßen Verfahren erhältlichen freie Isocyanatgruppen aufweisenden Oligourethane als Bindemittel oder Bindemittelkomponente in feuchtigkeitshärtenden Einkomponentenlacken.

Beim erfindungsgemäßen Verfahren werden als Diisocyanate a) solche der aus der Polyurethanchemie an sich bekannten Art eingesetzt. In Betracht kommen beispielsweise Diisocyanate der allgemeinen Formel

$R^3(NCO)_2$

in welcher

$R^3$ für einen die Isocyanatgruppen eines organischen Diisocyanats des Molekulargewichts 140 bis 336 verbindenden, gegebenenfalls Estergruppen aufweisenden Kohlenwaserstoffrest steht.

Vorzugsweise steht $R^3$ für einen gegebenenfalls Alkyl-substituierten und/oder gegebenenfalls Methylenbrücken aufweisenden, zweiwertigen aromatischen Kohlenwasserstoffrest mit insgesamt 6 bis 15 Kohlenstoffatomen, einen gegebenenfalls Estergruppen aufweisenden, zweiwertigen, gesättigten aliphatischen Kohlenwasserstoffrest mit insgesamt 4 bis 18 Kohlenstoffatomen, einen gegebenenfalls Alkyl-substituierten und/oder gegebenenfalls Methylenbrücken aufweisenden cycloaliphatischen Kohlenwasserstoffrest mit insgesamt 6 bis 15 Kohlenstoffatomen, einen aliphatisch-cycloaliphatischen, gegebenenfalls Alkylsubstituenten aufweisenden Kohlenwasserstoffrest mit ingesamt 7 bis 15 Kohlenstoffatomen oder einen Xylylenrest, wobei sich die Begriffe "aromatisch", "aliphatisch", "cycloaliphatisch" und "aliphatisch-cycloaliphatisch" jeweils auf die Natur der mit den Isocyanatgruppen verknüpften Kohlenstoffatomen beziehen.

Besonders bevorzugt handelt es sich bei dem Rest $R^3$ um die Isocyanatgruppen von 1,6-Diisocyanatohexan, Isophorondiisocyanat oder 2,4- bzw. 2,6-Diisocyanatotoluol verbindenden Kohlenwaserstoffreste. Beliebige Gemische entsprechender Diisocyanate können ebenfalls als Ausgangsmaterialien eingesetzt

werden.

Beispiele für geeignete Ausgangsdiisocyanate sind 1,4-Diisocyanatobutan, 1,5-Diisocyanatopentan, 1,6-Diisocyanatohexan, 1,8-Diisocyanatooctan, 1,10-Diisocyanatodecan, 1,12- Diisocyanatododecan, Isomerengemische aus 2,2,4-Trimethyl-1,6-diisocyanatohexan und 2,4,4-Trimethyl-1,6-diisocyanatohexan, 2-Methyl-1,5-diisocyanato-pentan, 2,2-Dimethyldiisocyanato-pentan, $\omega$-Isocyanato-capronsäure-(2-isocyanatoethyl)-ester, $\alpha$, $\omega$-Diisocyanatocapronsäureethylester, 1,4- und 1,3-Diisocyanatocyclohexan, 1-Isocyanato-3,3,5-trimethylisocyanatomethylcyclohexan, 1,4-und 1,3-Diisocyanatomethylcyclohexan, 2,4- und 4,4'-Diisocyanatodicyclohexylmethan, 4,4-Diisocyanatodicyclohexylpropan-(2,2), 1,3- und 1,4-Diisocyanatobenzol, 2,4-Diisocyanatotoluol, 2,6-Diisocyanatotoluol, 2,4- und 4,4'-Diisocyanatodiphenylmethan, 4,4'-Diisocyanatodi phenylpropan-(2,2), 1,3- und 1,4-Xylylendiisocyanat oder $\alpha,\alpha,\alpha',\alpha'$-Tetramethyl-m-oder p-Xylylen-diisocyanat, Naphthylen-1,5-diisocyanat, sowie aus diesen Verbindungen bestehende Gemische. Besonders bevorzugt werden 2,4-Diisocyanatotoluol, dessen technischen Gemische mit 2,6-Diisocyanatotoluol, 1,6-Diisocyanatohexan und Isophorondiisocyanat als Ausgangsmaterialien a) beim erfindungsgemäßen Verfahren eingesetzt.

Bei der beim erfindungsgemäßen Verfahren einzusetzenden Ausgangskomponente b) handelt es sich um Makropolyole, des aus der Funktionalität und dem Hydroxylgruppengehalt errechenbaren Molekulargewichts von 500 bis 10.000, vorzugsweise 800 bis 5.000. Besonders bevorzugt werden die entsprechenden Makrodiole eingesetzt. In Betracht kommen beispielsweise

(i) die in der Polyurethan-Chemie an sich bekannten Dihydroxylpolyester aus Dicarbonsäuren, z.B. Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder verschiedenen isomeren Bishydroxymethylcyclohexane;

(ii) die in der Polyurethan-Chemie an sich bekannten Polylactone, wie z.B. die auf den obengenannten zweiwertigen Alkoholen gestarteten Polymerisate des $\epsilon$-Caprolactons;

(iii) die in der Polyurethan-Chemie an sich bekannten Polycarbonate, wie sie durch Umsetzung beispielsweise der obengenannten Diole mit Diarylcarbonaten oder Phosgen zugänglich sind;

(iv) die in der Polyurethan-Chemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, der Butylenoxide, des Epichlorhydrins, und insbesondere des Propylenoxids. Ethylenoxid wird vorzugsweise anteilmäßig mitverwendet mit der Maßgabe, daß der verwendete Polyether maximal ca. 30 Gew.-% an Ethylenoxid enthält.

Wie bereits ausgeführt, handelt es sich bei den Makropolyolen vorzugsweise um Makrodiole. Grundsätzlich ist es jedoch auch möglich, den erfindungswesentlichen Verzweigungsgrad der erfindungsgemäßen Verfahrensprodukte, d.h. die mittlere, über 2 liegende Hydroxylfunktionalität der Ausgangskomponenten b) und c) durch Mitverwendung von höher als difunktionellen Makropolyolen zu gewährleisten. Derartige höher als difuktionelle Makropolyole werden in Analogie zu den gemachten Ausführungen unter Mitverwendung von tri- oder höherfunktionellen Ausgangsmaterialien in an sich bekannter Weise erhalten. Derartige höherfunktionelle Ausgangsmaterialien sind beispielsweise höherfunktionelle Alkohole wie Glycerin oder Trimethylenpropan, die als Aufbaukomponente für verzweigte Polyesterpolyole oder als Starter bei der Herstellung von verzweigten Polyetherpolyolen mitverwendet werden können.

Erfindungswesentlicher Bestandteil der Ausgangskomponente c) sind aliphatische Diole der allgemeinen Formel

$$R^1 - [O-(R^2-O-)_n H]_2,$$

in welcher
$R^1$, $R^2$ und n die bereits obengenannte Bedeutung haben.

Besonders bevorzugt wird das nicht weiter modifizierte 2,2,4-Trimethylpentandiol-1,3 (TMPD) als Diol der genannten allgemeinen Formel (n = 0) eingesetzt. Neben dem besonders bevorzugten TMPD können, wie aus der Formel ersichtlich, dessen Ethergruppen aufweisende Ethoxylierungs-und/oder Propoxylierungsprodukte, die (im statistischen Mittel) bis zu vier Ethersauerstoffatome pro Molekül aufweisen oder dessen Estergruppen aufweisende Additionsverbindungen mit bis zu 4 Mol $\epsilon$-Caprolacton pro Mol an Estergruppen-freiem Diol eingesetzt werden.

Diese erfindungswesentlichen Diole werden beim erfindungsgemäßen Verfahren in einer Menge von 1 bis 45, vorzugsweise 3 bis 20 Gew.-%, bezogen auf das Gesamtgewicht aller Ausgangskomponenten a) bis

c) mitverwendet. Der Anteil der beim erfindungsgemäßen Verfahren mitzuverwendenden Makropolyole b) liegt im allgemeinen bei 10 bis 60, vorzugsweise 20 bis 50 Gew.-%, bezogen auf das Gesamtgewicht aller Ausgangskomponenten a) bis c).

Die Ausgangskomponente c) braucht nicht ausschließlich aus erfindungswesentlichen Diolen der genannten Art zu bestehen, sondern kann auch andere mehrwertige Alkohole des Molekulargewichtsbereichs 62 bis 499, vorzugsweise 62 bis 300, umfassen. Hierzu gehören Diole wie z.B. Ethylenglykol, 1,4-Dihydroxybutan, 1,3-Dihydroxybutan, 1,6-Dihydroxyhexan, Diethylenglykol, Dipropylenglykol, Triethylenglykol, Tripropylenglykol und/oder Neopentylglykol, insbesondere jedoch tri- und höherfunktionelle Alkohole der Formel

$R^4(OH)_m$

in welcher

$R^4$ für einen m-wertigen, gegebenenfalls Ethergruppen aufweisenden aliphatischen Kohlenwasserstoffrest mit 2 bis 10 Kohlenstoffatomen und

m für 3, 4, 5 oder 6 steht.

Beispiele für solche mehrwertigen Alkohole sind Hexantriol-1.2.6, Trimethylolpropan, Glycerin, Pentaerythrit und/oder Sorbit und/oder Ethoxylierungs- und/oder Propoxylierungsprodukte der genannten einfachen mehrwertigen Alkohole, sofern sie ein unter 500 liegendes Molekulargewicht aufweisen.

Die gegebenenfalls zusätzlich zu den erfindungswesentlichen Diolen als Teil der Komponente c) vorliegenden mehrwertigen Alkohole können in einer Menge von bis zu 300, vorzugsweise bis zu 100 Mol-%, bezogen auf die erfindungswesentlichen Diole mitverwendet werden. Insbesondere die beispielhaft genannten höherfunktionellen, niedermolekularen Alkohole werden oftmals zur Einstellung der erfindungswesentlichen mittleren Hydroxylfunktionalität aller beim erfindungsgemäßen Verfahren eingesetzten Polyhydroxylverbindungen mitverwendet. Diese mittlere Hydroxylfunktionalität der Komponenten b) und c) liegt bei 2,05 bis 3,5, vorzugsweise 2,1 bis 2,5 und kann beispielsweise nach folgender Gleichung

$$F = \frac{\sum [\text{Mole x Funktionalität}]}{\sum \text{Mole}}$$

oder aus dem mittleren Molekulargewicht und dem Hydroxylgruppengehalt berechnet werden.

Zur Durchführung des erfindungsgemäßen Verfahrens werden die beispielhaft genannten Ausgangsmaterialien a) bis c) im allgemeinen in einem Eintopfverfahren miteinander zur Reaktion gebracht. Hierbei werden die Diisocyanate a) in einer, einem NCO/OH-Äquivalentverhältnis von 1,4:1 bis 2:1, vorzugsweise 1,4:1 bis 1,8:1, entsprechenden Menge eingesetzt. Die Umsetzung erfolgt im allgemeinen innerhalb des Temperaturbereichs von 20 bis 140 °C, vorzugsweise von 60 bis 120 °C, Vorzugsweise wird bei der Durchführung des erfindungsgemäßen Verfahrens die Diisocyanatkomponente a) vorgelegt, worauf sich die Zugabe der Polyhydroxylverbindungen b) und c) unter inniger Durchmischung anschließt. Die Komponenten b) und c) bzw. die diesen Komponenten zugrundeliegenden Einzelkomponenten können hierbei dem vorgelegten Diisocyanat in beliebiger Reihenfolge oder in beliebiger Abmischung zugegeben werden. Gemische der Ausgangskomponenten b) und c), bzw. der diesen Komponenten zugrundeliegenden Einzelkomponenten werden im allgemeinen jedoch nur unter der Voraussetzung eingesetzt, daß die betreffenden Komponenten miteinander verträglich sind. Im Falle einer Unverträglichkeit von einzelnen Polyhydroxylverbindungen untereinander erfolgt vorzugsweise eine getrennte Zugabe der miteinander unverträglichen Einzelkomponenten in beliebiger Reihenfolge.

Die Umsetzung kann in Gegenwart oder in Abwesenheit von geeigneten Lösungsmitteln durchgeführt werden. Bevorzugte Lösungsmittel sind aromatische Kohlenwasserstoffe wie Toluol, Xylole oder Alkylbenzolgemische (höheralkylierte Benzole), die beispielsweise unter dem Handelsnamen ®Solvesso oder ®Solventnaphtha im Handel erhältlich sind.

Falls die erfindungsgemäße Umsetzung in Abwesenheit eines derartigen Lösungsmittels oder nur in einem Teil des zur Lösung der Verfahrensprodukte vorgesehenen Lösungsmittels durchgeführt worden ist, kann es in (weiterem) Lösungsmittel aufgenommen werden. Die so erhaltenen Lösungen können mit aromatischen Lösungsmitteln der beispielhaft genannten Art oder auch mit anderen schwach polaren oder unpolaren Lösungsmitteln wie z.B. flüssigen Paraffinkohlenwasserstoffen, Cyclohexan, Methylcyclohexan, Testbenzin und/oder Petrolether verschnitten werden. Die Mitverwendung von polaren Lösungsmitteln wie beispielsweise Estern oder Ketonen ist selbstverständlich möglich, jedoch keinesfalls bevorzugt.

Die erfindungsgemäßen Verfahrensprodukte stellen feuchtigkeitshärtende Lackbindemittel für die unterschiedlichsten Anwendungen dar. Die erfindungsgemäßen Verfahrensprodukte können als Bindemittel oder als Bindemittelkomponente für Klarlacke, beispielsweise für die Lackierung von Holz oder Karton oder als Bindemittel bzw. als Bindemittelkomponente für pigmentierte Lacke, beispielsweise für Grundierung wie Zinkstaubgrundierungen, für Korrosionsschutz-, Holz- oder Kunststofflacke. Insbesondere bei der letztgenannten Verwendung erweist sich die Aromatenlöslichkeit der erfindungsgemäßen Verfahrensprodukte als Vorteil, da die entsprechenden Lacke keine polaren Lösungsmittel enthalten müssen und deshalb Kunststoffoberflächen nicht anlösen und die Dimensionsstabilität des zu lackierenden Gegenstands nicht gefährden. Die erfindungsgemäßen Verfahrensprodukte sind auch für mineralische Untergründe als Bautenschutzlacke geeignet.

Die die erfindungsgemäßen Verfahrensprodukte als Bindemittel oder als Bindemittelkomponente enthaltenden Lacke können neben den bereits genannten Lösungsmitteln und Pigmente auch andere, an sich bekannten Hilfs- und Zusatzmittel der Lacktechnologie enthalten. Hierzu gehören beispielsweise Füllstoffe, Verlaufhilfsmittel oder Katalysatoren wie z.B. Dibutylzinndilaurat oder Zinn(II)-octoat zur Beschleunigung der zur chemischen Vernetzung der Lackfilme führenden Reaktion zwischen den freien Isocyanatgruppen und Luftfeuchtigkeit.

Die Lackfilme auf Basis der erfindungsgemäßen Verfahrensprodukte zeichnen sich durch eine gute Chemikalienbeständigkeit, hohe Härte, hervorragenden Glanz und eine gute Elastizität aus.

In den nachfolgenden Beispielen beziehen sich alle Prozentangaben auf Gewichtsprozente.

## Beispiele

In den nachfolgenden Beispielen werden folgende Abkürzungen verwendet:

Diol I:

Polypropylenglykol des mittleren Molekulargewichts 1.000.

Diol II:

Polypropylenglykol des mittleren Molekulargewichts 2.000.

Diol III:

Polyesterdiol des mittleren Molekulargewichts 1.200 auf Basis von Adipinsäure, Neopentylglykol und 1,6-Dihydroxyhexan (Gewichtsverhältnis der Diole = 4 : 3)

Diol IV:

Ethergruppen aufweisendes Umsetzungsprodukt aus 1 Mol TMPD mit 2 Mol Propylenoxid (OH-Zahl = 428).

Polyol I:

Polyetherpolyol des mittleren Molekulargewichts 3.700, hergestellt durch Propoxylierung von Ethylendiamin.

IPDI:

1-Isocyanato-3,3,5-Trimethyl-5-isocyanatomethyl-cyclohexan.

TDI80:

Gemisch aus 80 % 2,4- und 20 % 2,6-Diisocyanatotoluol.

TDI100:

2,4-Diisocyanatotoluol.

TMP:

Trimethylolpropan.

TMPD:

2,2,4-Trimethylpentandiol-1,3.

Allgemeine Herstellungsvorschrift

Das Diisocyanat wird bei ca. 25 °C unter $N_2$ in einem Rührgefäß vorgelegt und in dem in den nachfolgenden Herstellungsbeispielen genannten Lösungsmittel gelöst. Anschließend erfolgt unter Rühren die Zugabe der in den nachfolgenden Herstellungsbeispielen genannten Reaktionspartnern, wobei zunächst die höhermolekularen Polyole, dann die erfindungswesentlichen Aufbaukomponenten (Diol IV bzw. TMPD) und schließlich das TMP zugesetzt werden. Im Bedarfsfall wird die Temperatur des gut gerührten Reaktionsgemischs durch Kühlen unterhalb 80 °C gehalten. Nach Bildung einer homogenen Mischung wird etwa während 20 Stunden auf 80 bis 100 °C erwärmt. Der theoretische NCO-Gehalt ist hiernach erreicht bzw. leicht unterschritten. Die resultierenden Lösungen werden unter Ausschluß von Feuchtigkeit in trockene Gebinde abgefüllt.

Wie Parallelversuche zeigten, ist die Reihenfolge der Zugabe des Lösungsmittels bzw. der Polyole zum vorgelegten Diisocyanat ohne Einfluß auf die Eigenschaften der resultierenden Lösungen der Isocyanatgruppen aufweisenden Oligourethane.

Beispiel 1

Ansatz:

1,72 Mol TDI80
0,075 Mol Diol II
0,25 Mol TMP
0,625 Mol TMPD
Xylol zur Herstellung einer 60 %igen Lösung.

Kenndaten:

Mittlere Hydroxylfunktionalität der verwendeten Polyole: 2,26
NCO/OH-Äquivalentverhältnis: 1,6:1
Feststoffgehalt der Lösung: 60 %
NCO-Gehalt der Lösung: 5,6 %
Gehalt der Lösung an monomeren TDI80: 1,6 %
Viskosität der Lösung bei 23 °C: 1.000 mPa.s

Beispiel 2

Ansatz:

1,6 Mol TDI100
0,03 Mol Polyol I
0,227 Mol TMP
0,6 Mol TMPD
Xylol zur Herstellung einer 60 %igen Lösung.

Kenndaten:

Mittlere Hydroxylfunktionalität der Polyole: 2,33
NCO/OH-Äquivalentverhältnis: 1,6:1
Feststoffgehalt der Lösung: 60 %
NCO-Gehalt der Lösung: 5,9 %
Gehalt der Lösung an monomeren TDI100: 0,15 %
Viskosität der Lösung bei 23 °C: 1.400 mPa.s

Beispiel 3

Ansatz:

1,65 Mol TDI100
0,325 Mol Diol I
0,2 Mol TMP
0,375 Mol TMPD
Gemisch aus Xylol und ®Solvesso 100 (3:2) zur Herstellung einer 70 %igen Lösung.

Kenndaten:

Mittlere Hydroxylfunktionalität: 2,22
NCO/OH-Äquivalentverhältnis: 1,65:1
Feststoffgehalt der Lösung: 70 %
NCO-Gehalt der Lösung: 5,1 %
Gehalt der Lösung an monomeren TDI100: 0,12 %
Viskosität der Lösung bei 23 °C: 1.700 mPa.s

Beispiel 4

Ansatz:

1,5 Mol TDI100
0,1 Mol Diol I
0,525 Mol Diol IV
0,25 Mol TMP
Xylol zur Herstellung einer 60 %igen Lösung.

Kenndaten:

Mittlere Hydroxylfunktionalität: 2,29
NCO/OH-Äquivalentverhältnis: 1,5:1
Feststoffgehalt der Lösung: 60 %
NCO-Gehalt der Lösung: 4,0 %
Gehalt der Lösung an monomeren TDI100: unter 0,03 %
Viskosität der Lösung bei 23 °C: 500 mPa.s

Beispiel 5

Ansatz:

1,5 Mol TDI100
0,15 Mol Diol I
0,55 Mol TMPD
0,167 Mol TMP
Xylol zur Herstellung einer 60 %igen Lösung.

Kenndaten:

Mittlere Hydroxylfunktionalität: 2,19
NCO/OH-Äquivalentverhältnis: 1,6:1
Feststoffgehalt der Lösung: 60 %
NCO-Gehalt der Lösung: 5,25 %
Gehalt der Lösung an monomeren TDI100: 0.17 %
Viskosität der Lösung bei 23 °C: 500 mPa.s

Beispiel 6

Ansatz:

1,65 Mol IPDI
0,325 Mol Diol I
0,375 Mol TMPD
0,2 Mol TMP
Xylol zur Herstellung einer 70 %igen Lösung.

Kenndaten:

Mittlere Hydroxylfunktionalität: 2,22
NCO/OH-Äquivalentverhältnis: 1,65:1
Feststoffgehalt der Lösung: 70 %
NCO-Gehalt der Lösung: 4,7 %
Gehalt der Lösung an monomeren IPDI: 0,7 %
Viskosität der Lösung bei 23 °C: 1.500 mPa.s

Beispiel 7

Ansatz:

1,65 Mol IPDI
0,325 Mol Diol III
0,375 Mol TMPD
0,2 Mol TMP
Gemisch aus Xylol/Solvesso 100 (3:2) zur Herstellung einer 70 %igen Lösung.

Kenndaten:

Mittlere Hydroxylfunktionalität: 2,22
NCO/OH-Äquivalentverhältnis: 1,65:1
Feststoffgehalt der Lösung: 70%

NCO-Gehalt der Lösung: 4,3 %
Farbzahl (DIN 53 409) der Lösung: 20
Gehalt der Lösung an freien IPDI: 0,3 %
Viskosität der Lösung bei 23 °C: 2.000 mPa.s

Die nachfolgenden Beispiele 8 und 9 zeigen, daß neben TMPD auch andere Diole als Kettenverlängerer mitverwendet werden können und klare Lösungen in Xylol resultieren.

Beispiel 8

Ansatz:

1,7 Mol TDI100
0,2 Mol TMP
0,325 Mol TMPD
0,15 Mol Butandiol-1,4
0.225 Mol Diol I
Xylol zur Herstellung einer 70 %igen Lösung.

Kenndaten:

Mittlere Hydroxylfunktionalität: 2,22
NCO/OH-Äquivalentverhältnis: 1,7:1
Feststoffgehalt der Lösung: 70 %
NCO-Gehalt der Lösung: 6,3 %
Gehalt der Lösung an monomeren TDI100: 0,4 %
Viskosität der Lösung bei 23 °C: 800 mPa.s

Beispiel 9

Wie Beispiel 8 jedoch mit dem Unterschied, daß anstelle von Butandiol-1,4 0,15 Mol Neopentylglykol eingesetzt werden.

Kenndaten:

Mittlere Hydroxylfunktionalität: 2,22
NCO/OH-Äquivalentverhältnis: 1,7:1
Feststoffgehalt der Lösung: 70 %
NCO-Gehalt der Lösung: 6,4 %
Gehalt der Lösung an monomeren TDI100: 0,5 %
Viskosität der Lösung bei 23 °C: 640 mPa.s

Beispiel 10

In diesem Beispiel wird die Verdünnbarkeit bei Raumtemperatur der Produktlösungen aus Beispiel 1 bis 9 bis zur Eintrübung untersucht.

| Produkt aus Beispiel | Verdünnbarkeit mit | | |
|---|---|---|---|
| | Xylol | Solvesso 100 | Testbenzin |
| 1 | ∞ | ∞ | - |
| 2 | ∞ | ∞ | - |
| 3 | ∞ | <15 % | - |
| 4 | ∞ | <10 % | - |
| 5 | ∞ | <10 % | - |
| 6 | ∞ | ∞ | <20 % |
| 7 | ∞ | ∞ | <20 % |
| 8 | <10 % | <20 % | - |
| 9 | <10 % | <20 % | - |

Aus den in der Tabelle zusammengefaßten Ergebnissen erkennt man, daß alle erfindungsgemäßen Oligourethane mit Xylol bis weit unter eine normale Arbeitskonzentration (50 bis 25 %ige Lösung) verdünnbar sind. Das gleiche gilt für den Alkylaromaten ®Solvesso 100. Zwei der Lösungen sind auch mit einem aliphatischen Kohlenwaserstoff verdünnbar und verarbeitbar. Die schlechteste Verdünnbarkeit haben die Produkte, in denen außer TMPD noch andere niedermolekulare Diole mitverwendet wurden.

Im folgenden Beispiel werden die Lackeigenschaften einiger ausgewählter erfindungsgemäßer Oligourethane untersucht:

Beispiel 11

Die Lösung des betreffenden Oligourethans wird mit Xylol auf eine Verarbeitungskonzentration von 45 % eingestellt und mit 0,45 % Dibutylzinndilaurat als Katalysator versetzt. Mit einer Lackhantel (Spaltbreite 0,12 mm) werden Klarlackfilme auf saubere, entfettete Glasplatten aufgetragen. Die Platten werden bei Umgebungstemperatur (20 bis 25 °C) gelagert. Man erhält glänzende, farblose klare Lackfilme. Die Meßergebnisse sind in der nachfolgenden Tabelle zusammengefaßt.

| | Bsp. 3 | Bsp. 4 | Bsp. 8 |
|---|---|---|---|
| Sandtrocknung (DIN 53 150) | 2 h | 2 h | 2 h |
| Pendelhärte n. König (DIN 53 157) | 160 | 150 | 130 |
| Anlösbarkeit nach 24 h | | | |
| Trocknung; Einwirkung (1 mm) | | | |
| von Ethylglykolacetat | 0 | 0 | 0 |
| Ethylacetat | 1 | 0 | 1 |
| Aceton | 1 | 1 | 3 |
| Superbenzin | 0 | 0 | 0 |
| Abrieb nach DIN 53 109 (CS 10/1000 U/10 N) | 20 mg | 18 mg | 25 mg |

Die Anlösbarkeit wird in 5 Stu~~den~~ fen gemessen: 0, 1, 2, 3, 4.

0 = Film völlig unverändert

4 = Film löst sich auf.

Diese Eigenschaften zeigen, daß die der Erfindung zugrunde liegende Aufgabe erfüllt wurde: Die nur in Kohlenwasserstoffen gelöste Einkomponentenlacke lassen sich zu hochwertigen vernetzten Polyurethanlackfilmen aushärten.

Beispiel 12 (Vergleichsbeispiel)

Es wird ein Oligourethan wie in Beispiel 3 hergestellt, Unterschied: Anstelle von 0,375 Mol TMPD werden 0,375 Mol Ethandiol-1,2 eingesetzt. In dem angegebenen Lösemittelgemisch Xylol/®Solvesso 100 (3:2) ist das Produkt unterhalb 30° C nicht klar löslich. Beim Weiterverdünnen mit Xylol entsteht eine milchig-trübe zweiphasige Flüssigkeit, die nicht zu einem Lack verarbeitet werden kann.

Beispiel 13 (Vergleichsbeispiel)

Man stellt ein Oligourethan wie in Beispiel 12 her und ersetzt TMPD durch die gleiche Molmenge Neopentylglykol. Man erhält in Xylol/®Solvesso 100 zunächst eine klare Lösung, die aber beim Stehen über Nacht eintrübt. Beim Weiterverdünnen mit Xylol entsteht eine milchigweiße trübe Lösung, die nicht zu einem Lack verarbeitet werden kann.

Beispiel 14

Dieses Beispiel zeigt, wie die Verdünnbarkeit einer Lösung eines Oligourethans mit Xylol und Alkylaromaten durch Einbau eines erfindungswesentlichen Diols stark verbessert werden kann. Ein Oligourethan wird aufgebaut aus folgenden Bestandteilen:

1,65 Mol 2,4-TDI

0,275 Mol Diol I
0,1 Mol TMP
0,575 Mol Diethylenglykol

Das Produkt löst sich 70 %ig klar in Xylol. Nun wird die Verdünnbarkeit mit Xylol und Solvesso 100 geprüft und diese verglichen mit der Verdünnbarkeit von 70 %igen Lösungen von Produkten gleichen Aufbaus, bei denen aber ein Teil des Diethylenglykols durch TMPD ersetzt wurde.

Die Ergebnisse sind in der folgenden Tabelle zusammengefaßt:

Die Ergebnisse sind in der folgenden Tabelle zusammengefaßt:

| Produkt mit Diethylenglykol Mol | TMPD Mol | %-Gehalt im Feststoff | Verdünnbarkeit der Lösung bis zu einem Feststoff von mit Xylol | ®Solvesso 100 |
|---|---|---|---|---|
| 0,575 | - | - | 30 | 60 |
| 0,525 | 0,05 | 1,1 | 11 | 25 |
| 0,475 | 0,1 | 2,28 | 7 | 20 |
| 0,425 | 0,15 | 3,40 | 3 | 12 |
| 0,375 | 0,2 | 4,35 | ∞ | ∞ |
| 0,325 | 0,25 | 5,65 | ∞ | ∞ |

Diese Versuchsreihe zeigt eindrucksvoll wie schon durch einen kleinen Gehalt eines erfindungswesentlichen Diols die Verdünnbarkeit mit Kohlenwasserstofflösemitteln entscheidend beeinflußt werden kann.

## Ansprüche

1. Verfahren zur Herstellung von aromatenlöslichen, als Lackbindemittel geeigneten, freie Isocyanatgruppen aufweisenden Oligourethanen durch Umsetzung von
   a) organischen Diisocyanaten
   mit
   b) Makropolyolen des Molekulargewichtsbereichs 500 bis 10.000
   und
   c) niedermolekularen Polyolen des Molekulargewichtsbereichs 62 bis 499
   unter Einhaltung eines Äquivalentverhältnisses von Isocyanatgruppen zu Hydroxylgruppen von 1,4:1 bis 2:1, dadurch gekennzeichnet, daß man als Komponente c), gegebenenfalls neben anderen niedermolekularen Polyolen, Diole der allgemeinen Formel

$$R^1\left[-O(R^2-O-)_n-H\right]_2$$

   in welcher
   $R^1$ für einen Rest der Formel

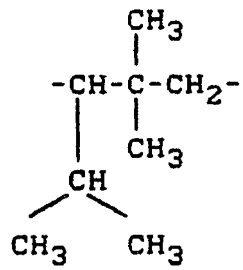

$R^2$ für Reste der Formeln

$-CH_2-CH_2-$, 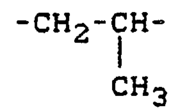

oder

$$-CO-(CH_2)_5-,$$

und n für 0, 1 oder 2 stehen. in einer Menge von 1 bis 45 Gew.%, bezogen auf das Gewicht aller Ausgangskomponenten a) bis c) verwendet und im übrigen Art und Mengenverhältnisse der Polyhydroxylverbindungen b) und c) so wählt, daß die mittlere Hydroxyefunktionalität dieser Verbindungen bei 2,05 bis 3,5 liegt.

2. Verfahren gemäß Anspruch 1, dadurch gekennzeichnet, daß man als weitere Komponente c) einen drei- und/oder höherwertigen, aliphatischen Alkohol zur Einstellung der Hydroxylfunktionalität mitverwendet.

3. Gemäß Anspruch 1 und 2 erhältliche freie Isocyanatgruppen aufweisende Oligourethane.

4. Verwendung der gemäß Anspruch 1 und 2 erhältlichen, freie Isocyanatgruppen aufweisenden Oligourethane als Bindemittel oder Bindemittelkomponente in feuchtigkeitshärtenden Einkomponentenlacken.

Patentansprüche für folgenden Vertragsstaat : ES

1. Verfahren zur Herstellung von aromatenlöslichen, als Lackbindemittel geeigneten, freie Isocyanatgruppen aufweisenden Oligourethanen durch Umsetzung von
   a) organischen Diisocyanaten
   mit
   b) Makropolyolen des Molekulargewichtsbereichs 500 bis 10.000
   und
   c) niedermolekularen Polyolen des Molekulargewichtsbereichs 62 bis 499 unter Einhaltung eines Äquivalentverhältnisses von Isocyanatgruppen zu Hydroxylgruppen von 1,4:1 bis 2:1, dadurch gekennzeichnet, daß man als Komponente c), gegebenenfalls neben anderen niedermolekularen Polyolen, Diole der allgemeinen Formel

$$R^1\left[-O(R^2-O-)_n-H\right]_2$$

in welcher
$R^1$ für einen Rest der Formel

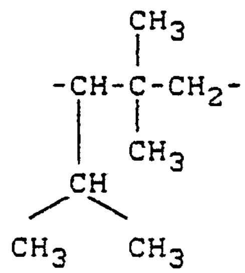

$R^2$ für Reste der Formeln

$-CH_2-CH_2-$, 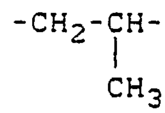

oder

$$-CO-(CH_2)_5-,$$

und n für 0, 1 oder 2 stehen,
in einer Menge von 1 bis 45 Gew.%, bezogen auf das Gewicht aller Ausgangskomponenten a) bis c) verwendet und im übrigen Art und Mengenverhältnisse der Polyhydroxylverbindungen b) und c) so wählt, daß die mittlere Hydroxylfunktionalität dieser Verbindungen bei 2,05 bis 3,5 liegt.

2. Verfahren gemäß Anspruch 1, dadurch gekennzeichnet, daß man als weitere Komponente c) einen dreiund/oder höherwertigen, aliphatischen Alkohol zur Einstellung der Hydroxylfunktionalität mitverwendet.

3. Verwendung der gemäß Anspruch 1 und 2 erhältlichen, freie Isocyanatgruppen aufweisenden Oligourethane als Bindemittel oder Bindemittelkomponente in feuchtigkeitshärtenden Einkomponentenlacken.

## Claims

1. A process for the production of oligourethanes bearing free isocyanate groups, which are soluble in aromatic hydrocarbons and which are suitable as paint binders, by reaction of
a) organic diisocyanates
with
b) macropolyols having a molecular weight in the range from 500 to 10,000
and
c) low molecular weight polyols having a molecular weight in the range from 62 to 499, an equivalent ratio of isocyanate groups to hydroxyl groups of 1.4:1 to 2:1 being maintained during the reaction, characterized in that diols corresponding to the general formula

$$R^1[-O(R^2-O-)_n-H]_2$$

in which
$R^1$ is a group corresponding to the formula

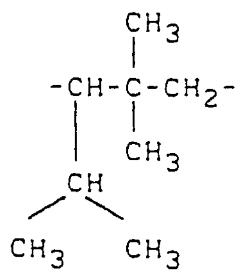

$R^2$ represents groups having the formulae $-CH_2-CH_2-$,

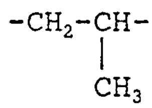 or $-CO-(CH_2)_5-$,

and

n is 0, 1 or 2

are used as component c), optionally in addition to other low molecular weight polyols, in a quantity of 1 to 45% by weight, based on the weight of all starting components a) to c), and the type of and quantitative ratios between the polyhydroxyl compounds b) and c) are selected so that the average hydroxyl functionality of these compounds is from 2.05 to 3.5.

2. A process as claimed in claim 1, characterized in that a trihydric and/or higher aliphatic alcohol is used as a further component c) to establish the hydroxyl functionality.

3. Oligourethanes bearing free isocyanate groups obtainable by the process claimed in claims 1 and 2.

4. The use of the oligourethanes bearing free isocyanate groups obtainable by the process claimed in claims 1 and 2 as a binder or binder component in moisture-curing one-component paints.

Claims for the following Contracting State : ES

1. A process for the production of oligourethanes bearing free isocyanate groups, which are soluble in aromatic hydrocarbons and which are suitable as paint binders, by reaction of

a) organic diisocyanates

with

b) macropolyols having a molecular weight in the range from 500 to 10,000

and

c) low molecular weight polyols having a molecular weight in the range from 62 to 499,

an equivalent ratio of isocyanate groups to hydroxyl groups of 1.4:1 to 2:1 being maintained during the reaction, characterized in that diols corresponding to the general formula

$$R^1[-O(R^2-O-)_n-H]_2$$

in which

$R^1$ is a group corresponding to the formula

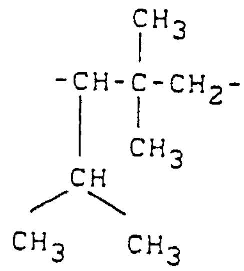

$R^2$ represents groups having the formulae $-CH_2-CH_2-$,

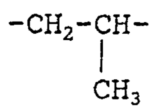 or $-CO-(CH_2)_5-$,

and

n is 0, 1 or 2

are used as component c), optionally in addition to other low molecular weight polyols, in a quantity of 1 to 45% by weight, based on the weight of all starting components a) to c), and the type of and quantitative ratios between the polyhydroxyl compounds b) and c) are selected so that the average hydroxyl functionality of these compounds is from 2.05 to 3.5.

2. A process as claimed in claim 1, characterized in that a trihydric and/or higher aliphatic alcohol is used as a further component c) to establish the hydroxyl functionality.

3. The use of the oligourethanes bearing free isocyanate groups obtainable by the process claimed in claims 1 and 2 as a binder or binder component in moisture-curing one-component paints.

**Revendications**

1. Procédé de préparation d'oligouréthannes contenant des groupes isocyanate libres; solubles dans les solvants aromatiques et appropriés à l'utilisation en tant que liants pour vernis, par réaction de
   a) des diisocyanates organiques avec
   b) des macropolyols de poids moléculaire 500 à 10 000 et
   c) des polyols à bas poids moléculaire, de poids moléculaire 62 à 499,
   à un rapport de 1,4:1 à 2:1 entre les èquivalents de groupes isocyanate et les équivalents de groupes hydroxy, caractérisé en ce que l'on utilise en tant que composant c), éventuellement avec d'autres polyols à bas poids moléculaire, des diols de formule générale

$$R^1[-O(R^2-O-)_n-H]_2$$

dans laquelle

$R^1$ représente un groupe de formule

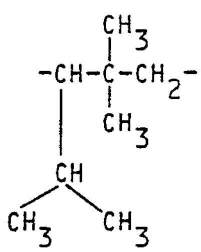

$R^2$ représente des groupes de formules

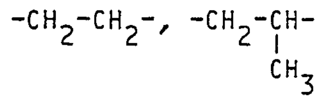

ou $-CO-(CH_2)_5-$,
et n est égal à 0, 1 ou 2,
en quantité de 1 à 45 % du poids de tous les composants de départ a) à c) et on choisit par ailleurs la nature et les proportions des composés polyhydroxylés b) et c) en sorte que la fonctionnalité moyenne en groupes hydroxy de ces composés aille de 2,05 à 3,5.

**2.** Procédé selon la revendication 1, caractérisé en ce que l'on utilise en tant qu'autre composant c) un alcool aliphatique trifonctionnel et/ou à fonctionnalité supérieure pour le réglage de la fonctionnalité en groupes hydroxy.

**3.** Les oligouréthannes contenant des groupes isocyanate libres obtenus selon les revendications 1 et 2.

**4.** Utilisation des oligouréthannes contenant des groupes isocyanate libres obtenus selon les revendications 1 et 2 en tant que liants ou composants de liants dans des vernis à un composant durcissant sous l'action de l'humidité.

Revendications pour l'Etat contractant suivant : ES

**1.** Procédé de préparation d'oligouréthannes portant des groupes isocyanate libres, solubles dans les solvants organiques et convenant à l'utilisation en tant que liants pour vernis, par réaction de
a) des diisocyanates organiques avec
b) des macropolyols de poids moléculaire 500 à 10 000 et
c) des polyols à bas poids moléculaire, de poids moléculaire 62 à 499 à un rapport de 1,4:1 à 2:1 entre les équivalents de groupes isocyanate et les équivalents de groupes hydroxy, caractérisé en ce que l'on utilise en tant que composant c), éventuellement avec d'autres polyols à bas poids moléculaire, des diols de formule générale

$$R^1[-O(R^2-O-)_n-H]_2$$

dans laquelle
$R^1$ représente un groupe de formule

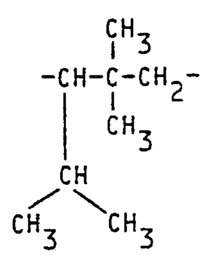

$R^2$ représente des groupes de formules

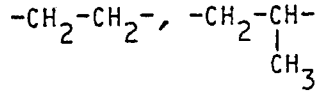

ou $-CO-(CH_2)_5-$,
et n est égal à 0, 1 ou 2,
en quantité de 1 à 45 % du poids de tous les composants de départ a) à c) et on choisit par ailleurs la nature et les proportions des composés polyhydroxylés b) et c) en sorte que la fonctionnalité moyenne en groupes hydroxy de ces composés aille de 2,05 à 3,5.

**2.** Procédé selon la revendication 1, caractérisé en ce que l'on utilise conjointement, en tant qu'autre composant c) un alcool aliphatique trivalent et/ou à valence supérieure, pour réglage de la fonctionnalité en groupes hydroxy.

**3.** Utilisation des oligouréthannes portant des groupes isocyanate libres, obtenus selon les revendications 1 et 2, en tant que liants ou composants de liants dans des vernis à un composant durcissant sous l'action de l'humidité.